# EUROPEAN PATENT APPLICATION

(11) **EP 4 447 254 A1**
(43) Date of publication of application: **16.10.2024**
(21) Application number: 22950864.3
(22) Date of filing: 23.09.2022
(51) Int. Cl.: H02J 7/00

(54) **ENERGY STORAGE SYSTEM**

(30) Priority: 14.07.2022 CN 202210834152
(71) Applicant: Alpha Ess Co., Ltd., Nantong, Jiangsu 226300 (CN)
(72) Inventor: SI, Xiuli, Nantong, Jiangsu 226300 (CN); LIU, Xiongjiang, Nantong, Jiangsu 226300 (CN); SUN, Liyan, Nantong, Jiangsu 226300 (CN); ZHU, Songhua, Nantong, Jiangsu 226300 (CN); JIANG, Siwei, Nantong, Jiangsu 226300 (CN); ZHANG, Haiyan, Nantong, Jiangsu 226300 (CN); SU, Jiaojiao, Nantong, Jiangsu 226300 (CN)
(74) Representative: Winter, Brandl - Partnerschaft mbB
(86) International application number: PCT/CN2022/120878
(87) International publication number: WO 2024/011753

(57) **Abstract**

The present application provides an energy storage system, which comprises: M energy storage batteries interconnected and a communication link, where an energy storage battery is provided with a unique controller configured to control a corresponding energy storage battery to connect to or bypass from the energy storage system, where the controller is configured to perform a balancing control method, where the controller is configured to: obtain a first state value of the corresponding energy storage battery, send the first state value to another M-1 controllers based on the communication link, receive second state values sent by another M-1 controllers, and determine whether to connect the corresponding energy storage battery to the energy storage system or bypass it from the energy storage system based on the first state value and the M-1 second state values. Technical solutions in the present application improves availability of an energy storage system.

## Description

### CROSS-REFERENCE TO RELATED APPLICATION

The application claims priority from Chinese Patent Application No. 202210834152.6, filed July 14, 2022, entitled "Energy Storage System", all of which are incorporated herein by reference in their entirety.

### TECHNICAL FIELD

The present application relates to a technical field of energy storage, and more particularly to an energy storage system.

### BACKGROUND

With the proliferation of new energy vehicles and the implementation of goals such as "carbon neutrality" and "carbon peak", the overall energy structure of society is shifting towards electrical energy. Energy storage systems are required in new energy vehicles, and in solar power generation and wind power generation.

In practice, energy storage systems usually consist of multiple battery devices connected with each other. After long-term operation, each battery's inconsistency increases due to factors such as internal resistance variation and capacity variation. Due to a barrel effect, the system's available capacity and energy are reduced, thereby decreasing the energy storage system's availability. Therefore, ensuring high availability of energy storage batteries becomes an urgent problem to solve.

### SUMMARY

An objective of the present application is to provide an energy storage system.

To achieve one of the above objectives, an embodiment of the present application provides an energy storage system, comprising: M energy storage batteries interconnected and a communication link, where an energy storage battery is provided with a unique controller configured to control a corresponding energy storage battery to connect to or bypass from the energy storage system, where M is a natural number and M≥2; a controller is configured to perform a balancing control method, where the controller is configured to obtain a first state value of the corresponding energy storage battery, send the first state value to another M-1 controllers based on the communication link, receive second state values sent by another M-1 controllers, and determine whether to connect the corresponding energy storage battery to the energy storage system or to bypass the corresponding energy storage battery from the energy storage system based on the first state value and M-1 second state values.

As a further improvement of an embodiment of the present application, the first state value and the second state value include an SOC value of the corresponding energy storage battery; "the controller is configured to determine whether to connect the corresponding energy storage battery to the energy storage system or to bypass the corresponding energy storage battery from the energy storage system based on the first state value and M-1 second state value" specifically comprises: the controller is configured to obtain an average value MV1 of M SOC values, and obtain an SOC value to be processed of the corresponding energy storage battery; the controller is configured to connect the corresponding energy storage battery to the energy storage system when the SOC value to be processed is within a predetermined threshold range, the energy storage system is in a charging state, and the SOC value to be processed is less than the average value MV1; and the controller is configured to bypass the corresponding energy storage battery from the energy storage system when the SOC value to be processed is within a predetermined threshold range, the energy storage system is in a charging state, and the SOC value to be processed is greater than the average value MV1; where the predetermined threshold range is [first threshold, second threshold], and 0 < first threshold < second threshold.

As a further improvement of an embodiment of the present application, the controller is configured to bypass the corresponding energy storage battery from the energy storage system when the SOC value to be processed is within a predetermined threshold range, the energy storage system is in a discharging state, and the SOC value to be processed is less than the average value MV1; and the controller is configured to connect the corresponding energy storage battery to the energy storage system when the SOC value to be processed is within a predetermined threshold range, the energy storage system is in a discharging state, and the SOC value to be processed is greater than the average value MV1.

As a further improvement of an embodiment of the present application, the first state value and the second state value include a maximum monomer voltage value of a corresponding energy storage battery; "the controller is configured to determine whether to connect the corresponding energy storage battery to the energy storage system or to bypass the corresponding energy storage battery from the energy storage system based on the first state value and M-1 second state value" specifically comprises: the controller is configured to obtain an average value MV2 of M maximum monomer voltage values, and obtain a maximum monomer voltage value VOL2 of the corresponding energy storage battery; the controller is configured to connect the corresponding energy storage battery to the energy storage system when the corresponding energy storage battery is in a bypass state, the maximum monomer voltage value VOL2 is not within a predetermined threshold range, the energy storage system is in a charging state, and the maximum monomer voltage value VOL2 is greater than the average value MV2; and the controller is configured to maintain a bypass state of the corresponding energy storage battery when the corresponding energy storage battery is in a bypass state, the maximum monomer voltage value VOL2 is not within a predetermined threshold range, the energy storage system is in a charging state, and the maximum monomer voltage value VOL2 is less than the average value MV2.

As a further improvement of an embodiment of the present application, the maximum monomer voltage value of the energy storage battery is a function of a temperature of an energy storage battery, a current of the energy storage system, and an SOC value of the energy storage battery, which is represented as F(temperature, current, SOC value).

As a further improvement of an embodiment of the present application, the first state value and the second state value include a minimum monomer voltage value of a corresponding energy storage battery; "the controller is configured to determine whether to connect the corresponding energy storage battery to the energy storage system or to bypass the corresponding energy storage battery from the energy storage system based on the first state value and M-1 second state value" specifically comprises: the controller is configured to obtain an average value MV3 of M minimum monomer voltage values, and obtain a minimum monomer voltage value VOL3 of the corresponding energy storage battery,; the controller is configured to connect the corresponding energy storage battery to the energy storage system when the corresponding energy storage battery is in a bypass state, the minimum monomer voltage value VOL3 is not within a predetermined threshold range, the energy storage system is in a discharging state, and the minimum monomer voltage value VOL3 is greater than the average value MV3; and the controller is configured to maintain a bypass state of the corresponding energy storage battery when the corresponding energy storage battery is in a bypass state, the minimum monomer voltage value VOL3 is not within a predetermined threshold range, the energy storage system is in a discharging state, and the minimum monomer voltage value VOL3 is less than the average value MV3.

As a further improvement of an embodiment of the present application, the minimum monomer voltage value of the energy storage battery is a function of a temperature of an energy storage battery, a current of the energy storage system, and an SOC value of the energy storage battery, which is represented as H(temperature, current, SOC value).

As a further improvement of an embodiment of the present application, controllers are configured to perform the balancing control method continuously until energy storage batteries are connected to the energy storage system.

As a further improvement of an embodiment of the present application, a first threshold is 20%.

As a further improvement of an embodiment of the present application, a second threshold is 90%.

Compared with the prior art, technical effects of the present application are: an embodiment of the present application provides an energy storage system, comprising: M energy storage batteries interconnected and a communication link, where an energy storage battery is provided with a unique controller configured to control a corresponding energy storage battery to connect to or bypass from the energy storage system, where M is a natural number and M≥2; a controller is configured to perform a balancing control method, where the controller is configured to obtain a first state value of the corresponding energy storage battery, send the first state value to another M-1 controllers based on the communication link, receive second state values sent by another M-1 controllers, and determine whether to connect the corresponding energy storage battery to the energy storage system or to bypass the corresponding energy storage battery from the energy storage system based on the first state value and M-1 second state values. Thus, the availability of the energy storage system can be improved.

### BRIEF DESCRIPTION OF THE DRAWINGS

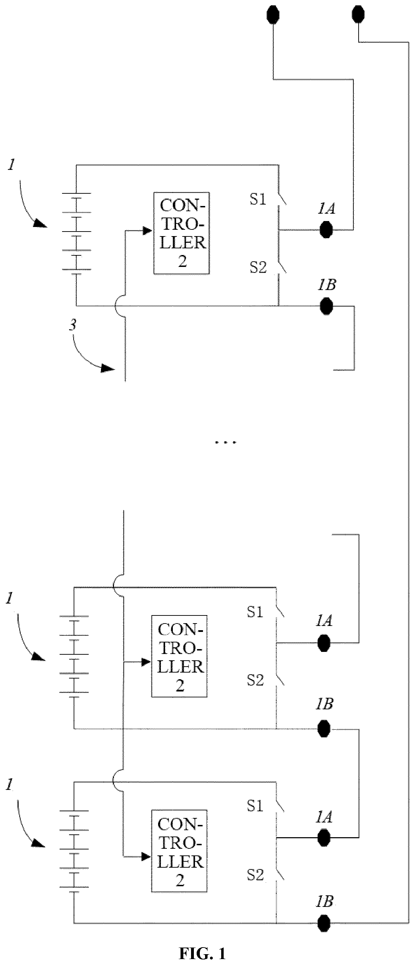

FIG. 1 shows a structural diagram of an energy storage system in an embodiment of the present application.

### DETAILED DESCRIPTION

The following detailed description of various embodiments is provided in conjunction with accompanying drawings. Embodiments do not limit the present application. Those skilled in the art can make structural, methodological, or functional changes based on these embodiments, which are included within the protective scope of the present application.

The terms used in the present application such as "upper," "above," "lower," "below," etc., are used to describe relative positions of the units or features shown in the figures for the sake of explanation. The terms of spatial relative positions may include different orientations of a device during use or operation besides an orientation shown in the figures. For example, if the device in the figures is turned over, units or features described as being "below" or "under" other units or features would be located "above" the other units or features. Therefore, the exemplary terms "below" may include both upper and lower orientations. The device can be oriented in other ways (rotated 90 degrees or other directions) and the spatially relative descriptive terms used herein are to be interpreted accordingly.

An embodiment of the present application provides an energy storage system, as shown in FIG.1, which comprises: M energy storage batteries 1 interconnected and a communication link 3. An energy storage battery 1 (e.g., each energy storage battery) is provided with a unique controller 2. The controller 2 is configured to control a corresponding energy storage battery 1 to be connected to or bypassed from the energy storage system. M is a natural number. M≥2. The energy storage battery 1 may include multiple battery cells connected in series or parallel, forming the energy storage battery 1. The energy storage battery 1 can be of types such as nickel-metal hydride batteries, nickel-cadmium batteries, lithium batteries. The controller 2 can be a microcontroller, etc. The communication link 3 can be Ethernet, optical fiber network, CAN (Controller Area Network), etc. The controller 2 can control charging, discharging, connecting to the energy storage system, or bypassing from the energy storage system of the energy storage battery 1. In use, the energy storage system will form a series circuit with an electrical equipment. It can be understood that when the energy storage battery 1 is connected to the energy storage system, the energy storage battery 1 is in the series circuit; when the energy storage battery 1 is bypassed from the energy storage system, the energy storage battery 1 is not in the series circuit.

A controller 2 (e.g., each controller 2) is configured to perform a balancing control method, where the controller is configured to obtain a first state value of the corresponding energy storage battery 1; the controller is configured to send the first state value to another M-1 controllers 2 based on the communication link 3; the controller is configured to receive second state values sent by another M-1 controllers 2; and the controller is configured to determine whether to connect the corresponding energy storage battery 1 to the energy storage system or bypass the corresponding energy storage battery 1 from the energy storage system based on the first state value and the M-1 second state values. Each controller 2 obtains the state value of its corresponding energy storage battery 1 and sends the state value to remaining M-1 controllers 2 through the communication link 3. Thus, the controller 2 can obtain the state values of all energy storage batteries 1 and then operate the corresponding energy storage battery 1 based on the state values of these M controllers. The controller 2 is configured to connect the energy storage battery 1 to the energy storage system or bypass the energy storage battery 1 from the energy storage system.

A positive terminal of the energy storage battery 1 is connected (e.g., electrically connected) to a first terminal of the first switch S1. A positive electrode 1A and a first terminal of the second switch S2 are connected (e.g., electrically connected) to a second terminal of the first switch S1. A second terminal of the second switch S2 is connected (e.g., electrically connected) to a negative electrode of the energy storage battery 1. The controller 2 is configured to control connection and disconnection between the first terminal of the first switch S 1 and the second terminal of the first switch S 1. The controller 2 is configured to control connection and disconnection between the first terminal of the second switch S2 and the second terminal of the second switch S2. As shown in FIG. 1, in an energy storage battery 1, when the first switch S1 is in a connected state and the second switch S2 is in a disconnected state, the energy storage battery 1 is connected to the energy storage system. When the first switch S1 is in a disconnected state and the second switch S2 is in a connected state, the energy storage battery 1 is in a bypass state, meaning the energy storage battery 1 is not connected to the energy storage system. The state values include: voltage, current, and temperature, etc.

In an embodiment, the first state value and the second state value include an SOC (State of Charge) value of a corresponding energy storage battery 1. The SOC value is used to reflect remaining capacity of a battery, defined as a ratio of the remaining capacity of a battery to the battery's capacity, expressed as a percentage in an example. The range of the SOC value is from 0 to 1. SOC=0 indicates the battery is fully discharged, and SOC=1 indicates the battery is fully charged. Main estimation methods of SOC value are analyzed as follows:(1) Internal Resistance Method: In the internal resistance measurement method, a controller is configured to determine an estimated value of SOC through using alternating current at different frequencies to stimulate a battery, measuring an internal alternating current resistance of the battery, and obtaining the estimated value of SOC through an established calculation model; and through the internal resistance method, the controller obtains a state of charge of the battery which reflects the SOC value of the battery under certain constant current discharge conditions. (2) Linear Model Method: The principle of the linear model method is based on a variation in SOC values, current, voltage, and an SOC value at a previous time point to establish a linear model; the linear model is suitable for conditions with low current and slowly changing SOC value and has high robustness to measurement errors and incorrect initial conditions; and (3) Kalman Filter Method: The Kalman filter method is based on an Ampere-hour integral method; a main idea of the Kalman filter method is to make an optimal estimate of a state of a dynamic system in sense of minimum variance; the Kalman filter method is applied to estimated value of SOC of a battery, where the battery is regarded as a dynamic system, and a state of charge is an internal state of the dynamic system.

In an embodiment, "the controller is configured to determine whether to connect the corresponding energy storage battery 1 to the energy storage system or to bypass the corresponding energy storage battery 1 from the energy storage system based on the first state value and M-1 second state value" specifically comprises: the controller is configured to obtain an average value MV1 of M SOC values, and obtain an SOC value to be processed of the corresponding energy storage battery 1; and the controller is configured to connect the corresponding energy storage battery 1 to the energy storage system when the SOC value to be processed is within a predetermined threshold range, the energy storage system is in a charging state, and the SOC value to be processed is less than the average value MV1.

During charging, when the SOC value of a certain energy storage battery 1 is less than the average value MV1, it can be considered that the energy storage battery 1 has a lower charge and needs charging. Therefore, the energy storage battery 1 can be connected to the energy storage system. The energy storage system is usually provided with a positive electrode and a negative electrode. When a current flows out from the positive electrode and into the negative electrode, it can be considered that the energy storage system is in a discharging state. When a current flows into the positive electrode and out from the negative electrode, it can be considered that the energy storage system is in a charging state. In practice, a detector can be used to determine whether the energy storage system is in the charging state or in the discharging state.

It can be understood that the SOC value to be processed can be determined to be within a predetermined threshold range when the SOC value to be processed is less than or equal to a first threshold and the SOC value to be processed is greater than or equal to a second threshold,. The SOC value to be processed can be determined to be not within a predetermined threshold range when the SOC value to be processed is less than a first threshold or greater than a second threshold.

The controller is configured to bypass the corresponding energy storage battery 1 from the energy storage system when the SOC value to be processed is within a predetermined threshold range, the energy storage system is in a charging state, and the SOC value to be processed is greater than the average value MV1. The predetermined threshold range is [first threshold, second threshold]. 0 < first threshold < second threshold. During charging, when the SOC value of a certain energy storage battery 1 is greater than the average value MV1, it can be considered that the energy storage battery 1 has a higher charge and does not need charging. Therefore, the energy storage battery 1 can be bypassed from the energy storage system.

As an energy storage battery 1 connected to the energy storage system charges, the SOC value of the energy storage battery 1 rises, and an average value of SOC also increases. The numerical size relationship between each energy storage battery 1 and the average value of SOC is determined in real-time. The energy storage battery 1 with SOC value less than the average value of SOC is configured to switch to a connection state, and the energy storage battery 1 with SOC value greater than the average value of SOC is configured to switch to a bypass state until all energy storage batteries are in the connection state, and then completing the balance.

In an embodiment, the controller is configured to bypass the corresponding energy storage battery 1 from the energy storage system when the SOC value to be processed is within a predetermined threshold range, the energy storage system is in a discharging state, and the SOC value to be processed is less than the average value MV1. During discharging, when the SOC value of a certain energy storage battery 1 is less than the average value MV1, it can be considered that the energy storage battery 1 has a lower charge and is not suitable for continued discharging. Therefore, the energy storage battery 1 can be bypassed from the energy storage system.

The controller is configured to connect the corresponding energy storage battery 1 to the energy storage system when the SOC value to be processed is within a predetermined threshold range, the energy storage system is in a discharging state, and the SOC value to be processed is greater than the average value MV1. During discharging, when the SOC value of a certain energy storage battery 1 is greater than the average value MV1, it can be considered that the energy storage battery 1 has a higher charge and is suitable for continued discharging. Therefore, the energy storage battery 1 can be accessed to the energy storage system.

As an energy storage battery connected to the energy storage system continues to discharge, the SOC value of the energy storage battery 1 decreases, and an average value of SOC also decreases. The numerical size relationship between each energy storage battery 1 and the average value of SOC is determined in real-time. The energy storage battery 1 with SOC value greater than the average value of SOC is configured to switch to a connection state, and the energy storage battery 1 with SOC value less than the average value of SOC is configured to switch to a bypass state until all energy storage batteries are in the connection state, and then completing the balance.

In an embodiment, the first state value and the second state value include a maximum monomer voltage value of a corresponding energy storage battery 1.

In an embodiment, "the controller is configured to determine whether to connect the corresponding energy storage battery 1 to the energy storage system or to bypass the corresponding energy storage battery 1 from the energy storage system based on the first state value and M-1 second state value" specifically comprises: the controller is configured to obtain an average value MV2 of M maximum monomer voltage values, and obtain a maximum monomer voltage value VOL2 of the corresponding energy storage battery 1. The controller is configured to connect the corresponding energy storage battery 1 to the energy storage system when the corresponding energy storage battery 1 is in a bypass state, the maximum monomer voltage value VOL2 is not within a predetermined threshold range, the energy storage system is in a charging state, and the maximum monomer voltage value VOL2 is greater than the average value MV2. The controller is configured to maintain a bypass state of the corresponding energy storage battery 1 when the corresponding energy storage battery 1 is in a bypass state, the maximum monomer voltage value VOL2 is not within a predetermined threshold range, the energy storage system is in a charging state, and the maximum monomer voltage value VOL2 is less than the average value MV2.

During discharging, for a bypassed energy storage battery 1, if a maximum monomer voltage value of the energy storage battery 1 is less than the average value MV2, the energy storage battery 1 is configured to switch to a connection state; if a maximum monomer voltage value is greater than or equal to the average value MV2, the energy storage battery 1 is configured to maintain a bypass state until all energy storage batteries are in the connection state, and then completing the balance.

In an embodiment, the maximum monomer voltage value of the energy storage battery 1 is a function of a temperature of an energy storage battery 1, a current of the energy storage system, and an SOC value of the energy storage battery 1. The maximum monomer voltage value of the energy storage battery 1 can be represented as F (temperature, current, SOC value). In practice, each energy storage battery 1 corresponds to a table that includes a relationship between the temperature of the energy storage battery 1, the current of the energy storage system, and the maximum monomer voltage value of the energy storage battery 1. Therefore, a function F() can be determined to reflect the table.

In an embodiment, the first state value and the second state value include a minimum monomer voltage value of a corresponding energy storage battery 1.

In an embodiment, "the controller is configured to determine whether to connect the corresponding energy storage battery 1 to the energy storage system or to bypass the corresponding energy storage battery 1 from the energy storage system based on the first state value and M-1 second state value" specifically comprises: the controller is configured to obtain an average value MV3 of M minimum monomer voltage values, and obtain a minimum monomer voltage value VOL3 of the corresponding energy storage battery 1. The controller is configured to connect the corresponding energy storage battery 1 to the energy storage system when the corresponding energy storage battery 1 is in a bypass state, the minimum monomer voltage value VOL3 is not within a predetermined threshold range, the energy storage system is in a discharging state, and the minimum monomer voltage value VOL3 is greater than the average value MV3. The controller is configured to maintain a bypass state of the corresponding energy storage battery 1 when the corresponding energy storage battery 1 is in a bypass state, the minimum monomer voltage value VOL3 is not within a predetermined threshold range, the energy storage system is in a discharging state, and the minimum monomer voltage value VOL3 is less than the average value MV3.

During discharging, for a bypassed energy storage battery 1, if a minimum monomer voltage value of the energy storage battery 1 is greater than the average value MV3, the energy storage battery 1 is configured to switch to a connection state; if a maximum monomer voltage value is less than or equal to the average value MV3, the energy storage battery 1 is configured to maintain a bypass state until all energy storage batteries are in the connection state, and then completing the balance.

In an embodiment, the minimum monomer voltage value of the energy storage battery 1 is a function of a temperature of an energy storage battery 1, a current of the energy storage system, and an SOC value of the energy storage battery 1. The minimum monomer voltage value of the energy storage battery 1 can be represented as H (temperature, current, SOC value). In practice, each energy storage battery 1 corresponds to a table that includes a relationship between the temperature of the energy storage battery 1, the current of the energy storage system, and the minimum monomer voltage value of the energy storage battery 1. Therefore, a function H() can be determined to reflect the table.

In an embodiment, a controller (e.g., each controller) are configured to perform the balancing control method continuously until energy storage batteries (especially, all energy storage batteries) are connected to the energy storage system.

In an embodiment, a first threshold is 20%.

In an embodiment, a second threshold is 90%.

It should be understood that although the present description describes the embodiments, not every embodiment includes a single independent technical solution. The description of this document is merely for the sake of clarity. Those skilled in the art should consider the specification as a whole, and the technical solutions in various embodiments can be appropriately combined to form other embodiments that can be understood by those skilled in the art.

The detailed descriptions listed above are merely specific descriptions of the feasible embodiments of the present application. They are not intended to limit the scope of the present application. All equivalent embodiments or modifications made without departing from the spirit of the present application should be included within the scope of the present application.

## Claims

1. An energy storage system, comprising: M energy storage batteries (1) interconnected and a communication link (3), where an energy storage battery (1) is provided with a unique controller (2) configured to control a corresponding energy storage battery (1) to connect to or bypass from the energy storage system, wherein M is a natural number and M≥2; **characterized in that**:
a controller (2) is configured to perform a balancing control method, where the controller (2) is configured to: obtain a first state value of the corresponding energy storage battery (1), send the first state value to another M-1 controllers (2) based on the communication link (3), and receive second state values sent by another M-1 controllers (2); and determine whether to connect the corresponding energy storage battery (1) to the energy storage system or to bypass the corresponding energy storage battery (1) from the energy storage system based on the first state value and M-1 second state values.

2. The energy storage system according to claim 1, **characterized in that**:
the first state value and the second state value include an SOC value of the corresponding energy storage battery (1);
"the controller is configured to determine whether to connect the corresponding energy storage battery (1) to the energy storage system or to bypass the corresponding energy storage battery (1) from the energy storage system based on the first state value and M-1 second state value" specifically comprises:
the controller (2) is configured to obtain an average value MV1 of M SOC values, and obtain an SOC value to be processed of the corresponding energy storage battery (1);the controller (2) is configured to connect the corresponding energy storage battery (1) to the energy storage system when the SOC value to be processed is within a predetermined threshold range, the energy storage system is in a charging state, and the SOC value to be processed is less than the average value MV1; and the controller (2) is configured to bypass the corresponding energy storage battery (1) from the energy storage system when the SOC value to be processed is within a predetermined threshold range, the energy storage system is in a charging state, and the SOC value to be processed is greater than the average value MV1; where the predetermined threshold range is [first threshold, second threshold], and 0 < first threshold < second threshold.

3. The energy storage system according to claim 2, **characterized in that**:
the controller (2) is configured to bypass the corresponding energy storage battery (1) from the energy storage system when the SOC value to be processed is within a predetermined threshold range, the energy storage system is in a discharging state, and the SOC value to be processed is less than the average value MV1; and
the controller (2) is configured to connect the corresponding energy storage battery (1) to the energy storage system when the SOC value to be processed is within the predetermined threshold range, the energy storage system is in a discharging state, and the SOC value to be processed is greater than the average value MV1.

4. The energy storage system according to claim 1, **characterized in that**:
the first state value and the second state value include a maximum monomer voltage value of a corresponding energy storage battery (1);
"the controller is configured to determine whether to connect the corresponding energy storage battery (1) to the energy storage system or to bypass the corresponding energy storage battery (1) from the energy storage system based on the first state value and M-1 second state value" specifically comprises:
the controller is configured to obtain an average value MV2 of M maximum monomer voltage values, and obtain a maximum monomer voltage value VOL2 of the corresponding energy storage battery (1);
the controller is configured to connect the corresponding energy storage battery (1) to the energy storage system when the corresponding energy storage battery (1) is in a bypass state, the maximum monomer voltage value VOL2 is not within a predetermined threshold range, the energy storage system is in a charging state, and the maximum monomer voltage value VOL2 is greater than the average value MV2; and
the controller is configured to maintain a bypass state of the corresponding energy storage battery (1) when the corresponding energy storage battery (1) is in a bypass state, the maximum monomer voltage value VOL2 is not within a predetermined threshold range, the energy storage system is in a charging state, and the maximum monomer voltage value VOL2 is less than the average value MV2.

5. The energy storage system according to claim 4, **characterized in that**:
the maximum monomer voltage value of the energy storage battery (1) is a function of a temperature of an energy storage battery (1), a current of the energy storage system, and an SOC value of the energy storage battery (1), which is represented as F(temperature, current, SOC value).

6. The energy storage system according to claim 1, **characterized in that**:
the first state value and the second state value include a minimum monomer voltage value of a corresponding energy storage battery (1);
"the controller is configured to determine whether to connect the corresponding energy storage battery (1) to the energy storage system or to bypass the corresponding energy storage battery (1) from the energy storage system based on the first state value and M-1 second state value" specifically comprises:
the controller is configured to obtain an average value MV3 of M minimum monomer voltage values, and obtain a minimum monomer voltage value VOL3 of the corresponding energy storage battery (1);
the controller is configured to connect the corresponding energy storage battery (1) to the energy storage system when the corresponding energy storage battery (1) is in a bypass state, the minimum monomer voltage value VOL3 is not within a predetermined threshold range, the energy storage system is in a discharging state, and the minimum monomer voltage value VOL3 is greater than the average value MV3; and
the controller is configured to maintain a bypass state of the corresponding energy storage battery (1) when the corresponding energy storage battery (1) is in a bypass state, the minimum monomer voltage value VOL3 is not within a predetermined threshold range, the energy storage system is in a discharging state, and the minimum monomer voltage value VOL3 is less than the average value MV3.

7. The energy storage system according to claim 6, **characterized in that**:
the minimum monomer voltage value of the energy storage battery (1) is a function of a temperature of an energy storage battery (1), a current of the energy storage system, and an SOC value of the energy storage battery (1), which is represented as H(temperature, current, SOC value).

8. The energy storage system according to claim 1, **characterized in that**:
controllers (2) are configured to perform the balancing control method continuously until energy storage batteries (1) are connected to the energy storage system.

9. The energy storage system according to any one of claims 1 to 8, **characterized in that**:
a first threshold is 20%.

10. The energy storage system according to any one of claims 1 to 8, **characterized in that**:
a second threshold is 90%.
